# EUROPÄISCHE PATENTSCHRIFT

(11) **EP 1 873 869 B1**
(45) Veröffentlichungstag und Bekanntmachung des Hinweises auf die Patenterteilung: **10.07.2013**
(21) Anmeldenummer: 07108738.1
(22) Anmeldetag: 23.05.2007
(51) Int. Cl.: F16B 19/00

(54) **Elektrisches Modul**
Electric module
Module électrique

(30) Priorität: 28.06.2006 DE 102006029740
(43) Veröffentlichungstag der Anmeldung: 02.01.2008
(73) Patentinhaber: Weidmüller Interface GmbH & Co. KG, 32758 Detmold (DE)
(72) Erfinder: Hock, Thomas, 78112 St. Georgen (DE); Nolting, Reinhard, 32758 Detmold (DE); Tobergte, Konrad, 32756 Detmold (DE)
(74) Vertreter: Dantz, Jan Henning

(56) Entgegenhaltungen:
- EP-A- 0 630 072
- EP-A2- 0 654 870
- DE-A1- 2 232 971
- FR-A1- 2 842 390
- GB-A- 2 268 003
- US-A- 5 328 389
- US-A1- 2004 229 503

## Beschreibung

Die Erfindung betrifft eine Anordnung aus mit einander verbundenen elektrischen Modulen, insbesondere aus Reihenklemme, nach dem Oberbegriff des Anspruches 1.

Elektrische Module, beispielsweise Reihenklemmen, sind in verschiedensten Ausgestaltungen bekannt. Derartige Reihenklemmen weisen oftmals korrespondierende Koppelelemente auf, die derart zusammenwirken, dass benachbarte Reihenklemmen durch das Zusammenwirken der ersten und zweiten Koppelelemente verbindbar sind, wobei das erste Koppelelement ein Rastzapfen und das zweite Koppelelement eine Rastzapfenaufnahme ist, und wobei die Rastzapfenaufnahme zur Aufnahme des Rastzapfens ausgestaltet ist, wozu sie mindestens eine Querschnittsänderung aufweist.

Der Rastzapfen weist dagegen ein auslenkbares Federelement auf, welches beim Einführen in die Rastzapfenaufnahme mit einem entsprechenden, den Querschnitt der Aufnahme ändernden Gegenstück derart in Eingriff gebracht wird, dass zwischen benachbarten Reihenklemmen eine belastbare, mechanische Verbindung hergestellt wird. Derartige Ausführungen sind aus der DE 2 232 971 OS und der DE 101 00 081 A1 bekannt. Aus der EP 0 630 072 A2 ist ein Befestigungszapfen bekannt, der nach dem Einführen in die Aufnahme erhitzt wird, so dass er schmilzt und sich in die Aufnahme einpasst. Die Druckschriften GB 2 268 003 A, FR 28 42 390 A1 und EP 0 654 870A2 offenbaren jeweils Zapfen, deren Querschnitt die Zapfenaufnahme zumindest teilweise überragt. Beim Einführen dieser Zapfen in ihre Zapfenaufnahme werden die Zapfen daher deformiert, so dass eine Presspassung entsteht. Der in der US 5,328,389 offenbarte Zapfen weist einen sich in seine Längsrichtung erstreckenden keilförmigen Einschnitt auf. Zum Einführen in die Zapfenaufnahme wird der Zapfen so deformiert, dass sich der keilförmige Einschnitt verengt. Nach dem Einführen wird der Zapfen zurückgeformt und presst sich in die in die Zapfenaufnahme. Zum Stand der Technik werden noch die DE 22 32 971 A1 die US 2004/0229503 A1 und die US 29 28 066 genannt.

Die gattungsgemäße Anordnung aus mit einander verbundenen elektrischen Modulen hat sich hinsichtlich seiner Verbindbarkeit zwar an sich bewährt, es unterliegt jedoch wie die meisten Bauelemente der Elektrotechnik dem ständigen Zwang nach einer billigeren Herstellung.

Ausgehend hiervon liegt der Erfindung die Aufgabe zugrunde, die gattungsgemäße Anordnung aus mit einander verbundenen elektrischen Modulen konstruktiv so zu vereinfachen, dass die Herstellungskosten - unter Gewährleistung einer weiterhin guten Verbindbarkeit benachbarter Module - gegenüber dem Stand der Technik gesenkt werden.

Die Erfindung löst diese Aufgabe durch den Gegenstand des Anspruches 1sowie das Verfahren des Anspruchs 16.

Danach weist der Zapfen gegenüber der Zapfenaufnahme ein Übermaß auf und er ist so ausgestaltet, dass er sich nach dem Einführen in die Zapfenaufnahme zur Bildung wenigstens einer Hinterschneidung in der mindestens einen Querschnittsänderung zeitverzögert fliessend - d.h. nicht unmittelbar sofort elastisch oder federnd - aufweitet. Gegenüber dem gattungsgemäßen Stand der Technik zeichnet sich das erfindungsgemäße Modul dadurch aus, dass es konstruktiv vereinfachte Koppelemente enthält, die eine im Vergleich zum Stand der Technik - bei einer vergleichbar guten Verbindbarkeit benachbarter Module - weniger komplexe Geometrie aufweisen und damit vergleichsweise einfach herzustellen und zuverlässig handhabbar sind.

Darüber hinaus weist die erfindungsgemäße Anordnung aus mit einander verbundenen elektrischen Modulen den Vorteil auf, dass seine einfacher ausgestalteten Koppelelemente aufgrund der im Vergleich zum Stand der Technik fehlenden Federelemente bzw. des Fehlens zugeordneter federnder Gegenstücke weniger anfällig gegenüber Beschädigungen während des Transports und/oder der Montage sind.

Eine besonders bevorzugte Variante der Erfindung zeichnet sich dadurch aus, dass die Koppelelemente aus Polyamid ausgeführt sind. Polyamid ist für die Herstellung von elektrischen Modulen besonders vorteilhaft, so dass die Erfindung bei einer Vielzahl von elektrischen Modulen angewandt werden kann.

Aus der DE 22 32 971 ist ein Hohlzapfen bekannt, der in einer Aufnahme zusammengedrückt wird und der sich nach dem Durchtreten einer Zapfenaufnahme unmittelbar elastisch aufweitet.

Weitere vorteilhafte Ausführungsformen der Erfindung sind den Unteransprüchen zu entnehmen.

Nachfolgend wird die Erfindung anhand eines Ausführungsbeispiels anhand der beiliegenden Zeichnungen näher erläutert. Es zeigen:

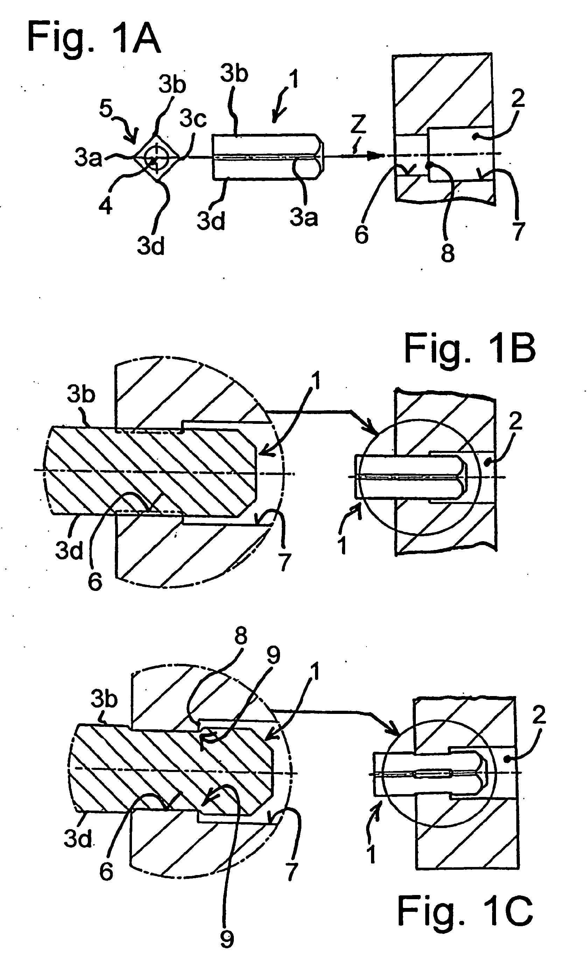

- Fig. 1A: Einen Zapfen und eine Zapfenaufnahme;
- Fig. 1B: ein Übermaß eines Zapfens gegenüber einer Zapfenaufnahme, sowie eine Querschnittsansicht dieser Anordnung; und
- Fig. 1C: eine Hinterschneidung einer Querschnittsänderung, sowie eine Querschnittsansicht dieser Anordnung.

Fig. 1A zeigt einen Zapfen 1 und eine Zapfenaufnahme 2. Der Zapfen 1 und die Zapfenaufnahme 2 sind Bestandteile von erfindungsgemäßen, benachbarten elektrischen Modulen, die aus Gründen der Übersichtlichkeit nicht gezeigt sind. Der Zapfen 1 weist im nicht montierten Zustand über seine gesamte axiale Länge einen konstanten Querschnitt auf. Er ist vorzugsweise im Querschnitt rund, oval oder mehreckig.

Der Zapfen 1 ist federelementfrei und nicht oder im wesentlichen auch nicht elastisch federnd ausgebildet. Analoges gilt für die ausgebildete Zapfenaufnahme 2, die auch federelementfrei und nicht oder im wesentlichen auch nicht elastisch federnd ausgebildet ist.

Der Zapfen 1 und die Zapfenaufnahme 2 wirken dabei so zusammen, dass die benachbarten elektrischen Module verbindbar sind. Hierzu wird der Zapfen 1 in Pfeilrichtung Z in die Zapfenaufnahme 2 eingeführt.

Der Zapfen 1 weist Längskanten 3a-3d und eine Bohrung 4 auf und ist hier in einer Vierkantform 5 ausgeführt. Die Zapfenaufnahme 2 ist als eine durchgehende, zweistufige Bohrung ausgestaltet, wobei eine erste Bohrstufe 6 einen kleineren Durchmesser aufweist, als eine zweite Bohrstufe 7. Zwischen der ersten Bohrstufe 6 und der zweiten Bohrstufe 7 befindet sich eine stufenförmige Querschnittsänderung 8.

Wie aus der Querschnittsansicht in Fig. 1B ersichtlich ist, weist der Zapfen 1 gegenüber dem (kleineren) Durchmesser der ersten Bohrstufe 6 ein Übermaß auf. Anders ausgedrückt: Der Abstand zwischen den gegenüberliegenden Längskanten 3a und 3c sowie 3b und 3d des Zapfens 1 ist größer als der Durchmesser der ersten Bohrstufe 6. Dies ist durch die Überlappung von Zapfen 1 und Zapfenaufnahme 2 in den Zeichnungen der Fig. 1B angedeutet.

Fig. 1C zeigt den Zapfen 1 und die Zapfenaufnahme 2 im Eingriff, nachdem der Zapfen 1 in Richtung des Pfeils Z (vgl. Fig. 1A) in die Zapfenaufnahme 2 eingeführt wurde. Aufgrund des erläuterten Übermaßes des Zapfens 1 wird dieser im Bereich der ersten Bohrstufe 6 zusammengedrückt. Dies hat zur Folge, dass Material im Bereich der Längskanten 3a-3d des Zapfens 1, welches im Bereich der ersten Bohrstufe 6 zusammengedrückt wird, in den Bereich der zweiten Bohrstufe 7 "fließt" - ggf. auch erst nach Tagen oder Wochen - und dort eine Hinterschneidung 9 der Querschnittsänderung 8 ausbildet. Auf diese Weise entsteht eine formschlüssige Verbindung, welche die benachbarten elektrischen Module verbindet.

Die Erfindung ist nicht auf das beschriebene Ausführungsbeispiel beschränkt, das auf vielfache Weise abgewandelt werden kann. Die als Ausnehmung ausgeführte Zapfenaufnahme 2 kann in Form einer durchgehenden Ausnehmung, beispielsweise als Durchgangsbohrung, oder in Form einer sacklochartigen Ausnehmung, beispielsweise als Sacklochbohrung ausgeführt sein.

Die im Ausführungsbeispiel stufenartig ausgestaltete Querschnittsänderung 8 kann auch bereichsweise stetig und/oder bereichsweise stufenartig ausgeführt sein. Weiterhin können der Zapfen 1 und die Zapfenaufnahme 2 in gleichartigen oder - vorzugsweise - verschiedenen Querschnitten ausgeführt werden, beispielsweise als vieleckiger, ovaler oder runder Querschnitt. Weiterhin kann Zapfen 1 eine Bohrung, beispielsweise zur Gewichtsreduzierung aufweisen. Denkbar ist weiterhin, dass der Zapfen 1 und die Zapfenaufnahme 2 aus unterschiedlichen Materialen bestehen, solange das erfindungsgemäße Ausbilden der Hinterschneidung 9 einer Querschnittsänderung 8 der Zapfenaufnahme 2 gegeben ist. Schließlich versteht sich, dass die verschiedenen Merkmale auch in anderen als den beschriebenen und dargestellten Kombinationen angewendet werden können.

**Bezugszeichenliste**

| | |
|---|---|
| Zapfen | 1 |
| Zapfenaufnahme | 2 |
| Längskante | 3a bis 3d |
| Bohrung | 4 |
| Vierkantform | 5 |
| Bohrstufe | 6 |
| Bohrstufe | 7 |
| Querschnittsänderung | 8 |
| Hinterschneidung | 9 |

## Patentansprüche

1. Anordnung aus miteinander verbundenen elektrischen Modulen, insbesondere aus Reihenklemmen, wobei jedes elektrische Modul wenigstens jeweils ein erstes und zweites Koppelelement aufweist, die derart zusammenwirken, dass benachbarte Module durch das Zusammenwirken der ersten und zweiten Koppelelemente verbunden sind, wobei das erste Koppelelement ein federelementfreier Zapfen (1) und das zweite Koppelelement eine federelementfreie Zapfenaufnahme (2) ist, wobei die Zapfenaufnahme (2) als Ausnehmung zur Aufnahme des Zapfens (2) ausgestaltet ist, und der Zapfen (1) in die Zapfenaufnahme (2) eingeführt ist, **dadurch gekennzeichnet, dass** die Zapfenaufnahme (2) mindestens eine Querschnittsänderung (8) aufweist, und der Zapfen (1) gegenüber der Zapfenaufnahme (2) ein Übermaß aufweist, wobei der Zapfen (1) nach dem Einführen in die Zapfenaufnahme (2) zur Bildung wenigstens einer Hinterschneidung (9) in der mindestens einen Querschnittsänderung (8) zeitverzögert fließend - d. h. nicht unmittelbar sofort elastisch oder federnd - aufgeweitet ist.

2. Anordnung nach einem der vorstehenden Ansprüche, **dadurch gekennzeichnet, dass** die Ausnehmung der Zapfenaufnahme (2) die Module jeweils vollständig durchsetzt.

3. Anordnung nach einem der vorstehenden Ansprüche, **dadurch gekennzeichnet, dass** die Ausnehmung sacklochartig ausgebildet ist.

4. Anordnung nach einem der vorstehenden Ansprüche, **dadurch gekennzeichnet, dass** die Querschnittsänderung (8) stufenartig ausgeführt ist.

5. Anordnung nach einem der vorstehenden Ansprüche, **dadurch gekennzeichnet, dass** die Querschnittsänderung (8) in einem Bereich der Ausnehmung stetig ausgeführt ist.

6. Anordnung nach einem der vorstehenden Ansprüche, **dadurch gekennzeichnet, dass** der Zapfen (1) und die Zapfenaufnahme (2) unterschiedliche Querschnittsprofile aufweisen

7. Anordnung nach einem der vorstehenden Ansprüche 1 bis 5, **dadurch gekennzeichnet, dass** der Zapfen (1) und die Zapfenaufnahme (2) ein vieleckiges Querschnittsprofil aufweisen.

8. Anordnung nach einem der vorstehenden Ansprüche 1 bis 5, **dadurch gekennzeichnet, dass** der Zapfen (1) und die Zapfenaufnahme (2) ein ovales Querschnittsprofil aufweisen.

9. Anordnung nach einem der vorstehenden Ansprüche 1 bis 5, **dadurch gekennzeichnet, dass** der Zapfen (1) und die Zapfenaufnahme (2) ein rundes Querschnittsprofil aufweisen.

10. Anordnung nach einem der vorstehenden Ansprüche, **dadurch gekennzeichnet, dass** der Zapfen (1) eine Bohrung (4) enthält.

11. Anordnung nach einem der vorstehenden Ansprüche
**dadurch gekennzeichnet, dass** der Zapfen (1) und die Zapfenaufnahme (2) aus unterschiedlichen Materialien ausgeführt sind.

12. Anordnung nach einem der vorstehenden Ansprüche 1-11, **dadurch gekennzeichnet, dass** Zapfen (1) und/oder die Zapfenaufnahme (2) aus dem Material Polyamid ausgeführt sind.

13. Anordnung nach einem der vorstehenden Ansprüche 1-12, **dadurch gekennzeichnet, dass der** Zapfen (1) über seine axiale Länge einen konstanten Querschnitt aufweist.

14. Anordnung nach einem der vorstehenden Ansprüche 1-14, **dadurch gekennzeichnet, dass** Material im Bereich der Längskanten (3a-3d) des Zapfens (1), welches im Bereich der ersten Bohrstufe (6) bei der Montage zunächst zusammengedrückt wird, zeitverzögert in den Bereich der zweiten Bohrstufe (7) fließt und dort derart die Hinterschneidung (9) der Querschnittsänderung (8) ausbildet.

15. Anordnung nach Anspruch 14 oder 15, **dadurch gekennzeichnet, dass** der Zapfen (1) einen mehreckigen, insbesondere viereckigen Querschnitt mit Längskanten (3a-3d) aufweist und dass Material im Bereich der Längskanten (3a-3d) des Zapfens (1), das bei der Montage im Bereich der ersten Bohrstufe (6) zusammengedrückt wird, in den Bereich der zweiten Bohrstufe (7) fließt und dort eine Hinterschneidung (9) der Querschnittsänderung (8) ausbildet.

16. Verfahren zum Verbinden elektrischer Module, wobei jedes elektrische Modul wenigstens jeweils ein erstes und zweites Koppelelement aufweist, die derart zusammenwirken, dass benachbarte Module durch das Zusammenwirken der ersten und zweiten Koppelelemente verbunden werden, wobei das erste Koppelelement ein federelementfreier Zapfen (1) und das zweite Koppelelemente eine federelementfreie Zapfenaufnahme (2) ist, wobei die Zapfenaufnahme (2) als Ausnehmung zur Aufnahme des Zapfens (1)ausgestaltet ist, **dadurch gekennzeichnet, dass** der Zapfen (1) gegenüber der Zapfenaufnahme (2) ein Übermaß aufweist, und die Zapfenaufnahme (2) mindestens eine Querschnittsänderung (8) aufweist, wobei das Verfahren die Schritte umfasst:
• Der Zapfen (1) wird in die Zapfenaufnahme (2) eingeführt, und
• Der Zapfen (1) weitet sich nach dem Einführen in die Zapfenaufnahme (2) zur Bildung wenigstens einer Hinterschneidung (9) in der mindestens einen Querschnittsänderung (8) zeitverzögert fließend - d.h. nicht unmittelbar sofort elastisch oder federnd - auf.

## Claims

1. Arrangement of interconnected electric modules, in particular terminal blocks, wherein each electric module comprises at least one first and one second coupling element which act together in such a way that adj acent modules are connected by the interaction of the first and second coupling elements, wherein the first coupling element is a spring element-free pin (1) and the second coupling element is a spring element-free pin receptacle (2), wherein the pin receptacle (2) is designed as a recess for receiving the pin (1) and the pin (1) is inserted into the pin receptacle (2), **characterised in that** the pin receptacle (2) has at least one cross-sectional change (8) and the pin (1) is oversized relative to the pin receptacle (2), wherein the pin (1), following its insertion into the pin receptacle (2), is expanded flowingly with a time delay - i.e. not immediately in an elastic or resilient manner - to form at least one undercut (9) in the at least one cross-sectional change (8).

2. Arrangement according to any of the preceding claims, **characterised in that** the recess of the pin receptacle (2) completely passes through each of the modules.

3. Arrangement according to any of the preceding claims, **characterised in that** the recess is designed as a blind hole.

4. Arrangement according to any of the preceding claims, **characterised in that** the cross-sectional change (8) is stepped.

5. Arrangement according to any of the preceding claims, **characterised in that** the cross-sectional change (8) is designed to be continuous in a region of the recess.

6. Arrangement according to any of the preceding claims, **characterised in that** the pin (1) and the pin receptacle (2) have different cross-sectional profiles.

7. Arrangement according to any of claims 1 to 5, **characterised in that** the pin (1) and the pin receptacle (2) have a polygonal cross-sectional profile.

8. Arrangement according to any of claims 1 to 5, **characterised in that** the pin (1) and the pin receptacle (2) have an oval cross-sectional profile.

9. Arrangement according to any of claims 1 to 5, **characterised in that** the pin (1) and the pin receptacle (2) have a circular cross-sectional profile.

10. Arrangement according to any of the preceding claims, **characterised in that** the pin (1) includes a bore (4).

11. Arrangement according to any of the preceding claims, **characterised in that** the pin (1) and the pin receptacle (2) are made of different materials.

12. Arrangement according to any of the preceding claims 1 to 11, **characterised in that** the pin (1) and/or the pin receptacle (2) is/are made of polyamide.

13. Arrangement according to any of the preceding claims 1 to 12, **characterised in that** the pin (1) has a constant cross-section along its axial length.

14. Arrangement according to any of the preceding claims 1 to 14, **characterised in that** material in the region of the longitudinal edges (3a-3d) of the pin (1), which material is initially compressed in the region of the first drilling stage (6) in the assembly process, flows with a time delay into the region of the second drilling stage (7), there forming the undercut (9) of the cross-sectional change (8).

15. Arrangement according to claim 14 or 15, **characterised in that** the pin (1) has a polygonal, in particular quadrilateral, cross-sections with longitudinal edges (3a-3d), and **in that** the material in the region of the longitudinal edges (3a-3d) of the pin (1), which is compressed in the region of the first drilling stage (6) in the assembly process, flows into the region of the second drilling stage (7), there forming an undercut (9) of the cross-sectional change (8).

16. Method for connecting electric modules, wherein each electric module comprises at least one first and one second coupling element which act together in such a way that adjacent modules are connected by the interaction of the first and second coupling elements, wherein the first coupling element is a spring element-free pin (1) and the second coupling element is a spring element-free pin receptacle (2), wherein the pin receptacle (2) is designed as a recess for receiving the pin (1), **characterised in that** the pin (1) is oversized relative to the pin receptacle (2) and the pin receptacle (2) has at least one cross-sectional change (8), the method comprising the following steps:
• The pin (1) is inserted into the pin receptacle (2), and
• Following its insertion into the pin receptacle (2), the pin (1) expands flowingly with a time delay - i.e. not immediately in an elastic or resilient manner - to form at least one undercut (9) in the at least one cross-sectional change (8).

## Revendications

1. Dispositif formé de modules électriques reliés les uns aux autres, notamment des bornes en série,
chaque module électrique ayant respectivement au moins un premier et un second élément de couplage qui coopère pour relier les modules voisins par la coopération des premiers et seconds éléments de couplage,
- le premier élément de couplage étant un goujon (1) sans élément à ressort et le second élément de couplage étant un logement (2) sans élément de ressort,
- le logement (2) étant réalisé comme cavité pour recevoir le goujon (1) qui est introduit dans le logement (2),
dispositif **caractérisé en ce que**
le logement (2) a au moins une variation de section (8) et le goujon (1) est surdimensionné par rapport au logement (2),
- le goujon (1) après son introduction dans le logement (2) s'élargit en fluant de manière retardée, c'est-à-dire non pas immédiatement de manière élastique ou à ressort pour former au moins une contre-dépouille (9) par au moins cette variation de section (8).

2. Dispositif selon la revendication 1,
**caractérisé en ce que**
la cavité du logement (2) traverse complètement de façon respective le module.

3. Dispositif selon l'une des revendications précédentes,
**caractérisé en ce que**
la cavité est en forme de trou borgne.

4. Dispositif selon l'une des revendications précédentes,
**caractérisé en ce que**
la variation de section (8) se fait de manière échelonnée.

5. Dispositif selon l'une des revendications précédentes,
**caractérisé en ce que**
la variation de section (8) est réalisée de façon continue dans une zone de la cavité.

6. Dispositif selon l'une des revendications précédentes,
**caractérisé en ce que**
le goujon (1) et le logement (2) ont des profils de section différents.

7. Dispositif selon l'une des revendications précédentes 1 à 5, **caractérisé en ce que**
le goujon (1) et le logement (2) ont un profil de section polygonal.

8. Dispositif selon l'une des revendications 1 à 5,
**caractérisé en ce que**
le goujon (1) et le logement (2) ont un profil de section ovale.

9. Dispositif selon l'une des revendications 1 à 5,
**caractérisé en ce que**
le goujon (1) et le logement (2) ont un profil de section, rond.

10. Dispositif selon l'une quelconque des revendications,
**caractérisé en ce que**
le goujon (1) comporte un perçage (4).

11. Dispositif selon l'une des revendications précédentes,
**caractérisé en ce que**
le goujon (1) et le logement (2) sont réalisés dans des matières différentes.

12. Dispositif selon l'une des revendications 1 à 11,
**caractérisé en ce que**
le goujon (1) et/ou le logement (2) sont en polyamide.

13. Dispositif selon l'une des revendications 1 à 12,
**caractérisé en ce que**
le goujon (1) a une section constante sur toute sa longueur axiale.

14. Dispositif selon l'une des revendications 1 à 13,
**caractérisé en ce que**
la matière dans la zone des arrêtes longitudinales (3a-3d) du goujon (1) qui est tout d'abord comprimée lors du montage dans la zone du premier perçage étagé (6), flue de manière temporisée dans la zone du second niveau de perçage (7) et s'y développe à la manière d'une contre-dépouille (9) par variation de sa section (8).

15. Dispositif selon la revendication 13 ou 14,
**caractérisé en ce que**
le goujon (1) a une section polygonale notamment à quatre sommets avec des arrêtes longitudinales (3a-3d) et la matière dans la zone des arrêtes longitudinales (3a-3d) du goujon (1) qui est comprimée au montage dans la zone du premier étage de perçage (6) flue dans la zone du second niveau de perçage (7) et y développe une contre-dépouille (9) par variation de section (8).

16. Procédé pour relier des modules électriques,
chaque module électrique ayant au moins un premier et un second élément de couplage qui coopèrent pour relier les modules voisins par la coopération du premier et du second élément de couplage,
le premier élément de couplage étant un goujon sans élément à ressort (1) et le second élément de couplage étant un logement (2) sans élément à ressort,
le logement (2) étant réalisé comme cavité pour recevoir le goujon (1), procédé **caractérisé en ce que**
le goujon (1) est surdimensionné par rapport au logement (2) qui a au moins une variation de section (8),
procédé comprenant les étapes suivantes :
- on introduit le goujon (1) dans le logement (2), et
- le goujon (1) s'élargit après son introduction dans le logement (2) pour former au moins une contre-dépouille (9) par au moins une variation de section (8) produite par un fluage temporisé, c'est-à-dire qui ne se fait pas immédiatement de manière élastique ou à ressort.
